# EUROPEAN PATENT APPLICATION

(11) **EP 1 309 107 A1**
(43) Date of publication of application: **07.05.2003**
(21) Application number: 02771761.0
(22) Date of filing: 21.05.2002
(51) Int. Cl.: H04B 7/26, H04L 1/18

(54) **BASESTATION DEVICE; RADIO COMMUNICATION SYSTEM; AND PACKET COMMUNICATION METHOD**

(30) Priority: 24.05.2001 JP 2001155413
(71) Applicant: MATSUSHITA ELECTRIC INDUSTRIAL CO., LTD., Kadoma-shi, Osaka 571-8501 (JP)
(72) Inventor: SUMASU, Atsushi, Yokosuka-shi, Kanagawa 238-0013 (JP); MIYOSHI, Kenichi, Kanazawa-ku, Yokohama-shi, Kanagawa 236- (JP); HAYASHI, Masaki, Yokosuka-shi, Kanagawa 239-0847 (JP); SUZUKI, Hidetoshi, Yokosuka-shi, Kanagawa 239-0847 (JP)
(74) Representative: Grünecker, Kinkeldey, Stockmair & Schwanhäusser Anwaltssozietät
(86) International application number: JP0204903
(87) International publication number: WO02095986

(57) **Abstract**

Control section 115 calculates the timing of virtual timeout based on timeout information, and outputs to layer 2 downlink processing section 111 an MCS control signal which is a control signal to show updated modulation technique when the timing of virtual timeout is pressed. When the MCS control signal from control section 115 is inputted into layer 2 downlink processing section 111, the m-ary modulation is reduced and the data accumulated in memory is modulated. Layer 1 transmission section 112 transmits the signal outputted from layer 2 downlink processing section 111 as a radio signal via antenna after being subjected to a radio processing. Accordingly, even if radio terminal apparatus radio transmits an ACK signal, it is possible to prevent the time-out before the reception of ACK signal by transmission side terminal apparatus, hence, it is possible to prevent the deterioration of throughput due to reducing the size of the next data transmission.

## Description

### Technical Field

The present invention relates to base station apparatus, radio communication system, and packet transmission method which carry out packet transmission.

### Background Art

In a radio communication system in which packet transmission between base station apparatus and terminal apparatus is carried out, TCP (Transmission Control Protocol) that carries out error control and layer 2 retransmission protocol that carries out error control in a radio interval are used jointly in each apparatus.

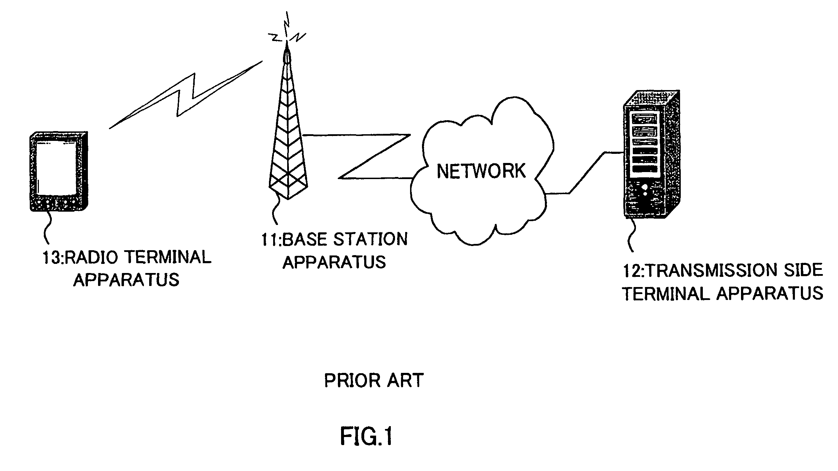

FIG. 1 is a system configuration diagram which shows a configuration of a conventional radio communication system apparatus. In FIG. 1, base station apparatus carries out wired-communication with transmission side terminal apparatus and TCP through network, etc., while carries out wireless communication with radio terminal apparatus and layer 2.

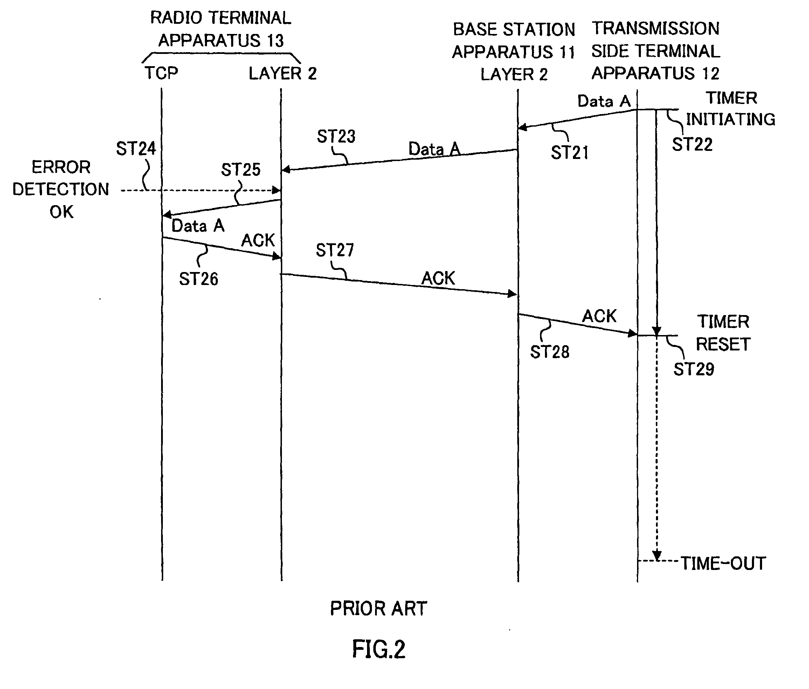

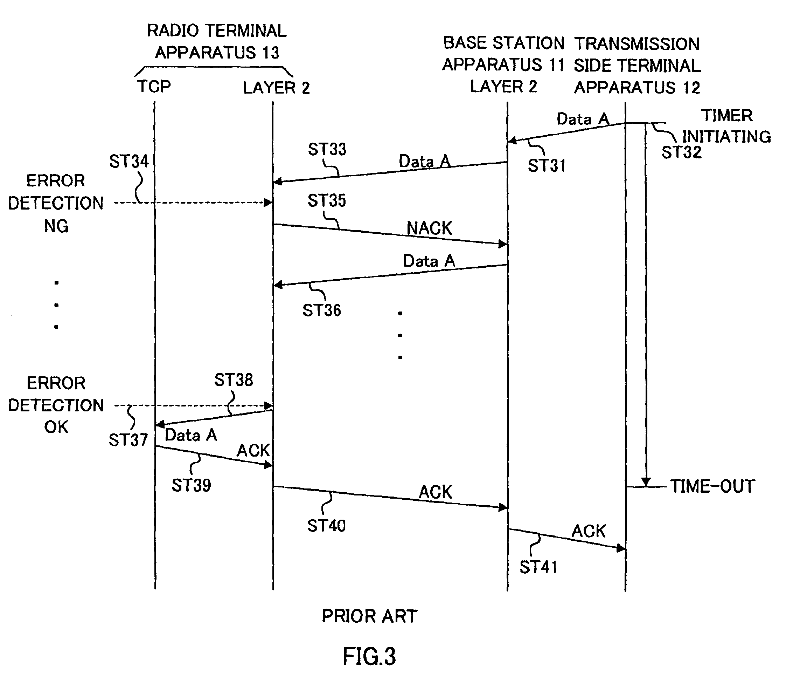

FIG. 2 and FIG. 3 are sequence figures showing packet transmission procedures of a conventional radio communication system. FIG. 2 shows the case when the data transmitted from transmission side terminal apparatus 12 is received correctly in radio terminal apparatus 13, while FIG. 3 shows the case when the data transmitted from transmission side terminal apparatus 12 is received erroneously in radio terminal apparatus 13.

First, the case of FIG. 2 will be explained. Transmission side terminal apparatus 12 transmits data A (Data A) to base station apparatus 11 (ST: step 21), and a timer is initiated (ST22).

Base station apparatus 11 transmits data A received from transmission side terminal apparatus 12 in layer 2 as a radio signal to radio terminal apparatus 13 (ST23).

Radio terminal apparatus 13 performs error detection on Data A received over layer 2, passes Data A to TCP layer (ST25) if an error was not detected (ST 24), and from TCP layer, sends an ACK signal that indicates a correct reception to layer 2 (ST26).

Then, radio terminal apparatus 13 radio transmits the ACK signal over layer 2 to base station apparatus 11 (ST27), and base station apparatus 11 radio transmits the ACK signal which received from radio terminal apparatus 13 to transmission side terminal apparatus 12 (ST28). When transmission side terminal apparatus 12 receives ACK signal, timer is reset (ST29).

Then, the aforementioned processing ST21-ST29 are repeated in order to process the next data.

Next, the case of FIG. 3 will be explained. ST31-ST33 in FIG. 3 are respectively similar to ST21-ST23 of FIG. 2.

Radio terminal apparatus 13 performs error detection on Data A in layer 2, and radio transmits a NACK signal which indicates a retransmission request of Data A in layer 2 (ST35) to base station apparatus 11 if an error was detected (ST34). When NACK signal is received as a radio signal from radio terminal apparatus 13, base station apparatus 11 retransmits Data A in the same way as the aforementioned ST33 (ST36).

Till Data A is received correctly in radio terminal apparatus 13, the aforementioned ST34-ST36 processes are repeated in order to process Data A.

Then, radio terminal apparatus 13 performs error detection on Data A in layer 2, passes Data A to TCP layer (ST38) if an error was not detected (ST37), and from TCP layer, sends ACK signal that indicates a correct reception to layer 2 (ST39).

Next, radio terminal apparatus 13 radio transmits the ACK signal over layer 2 to base station apparatus 11 (ST40), and base station apparatus 11 transmits the ACK signal which received from radio terminal apparatus 13 as a radio signal to transmission side terminal apparatus 12 (ST41).

When ACK signal is not returned within an interval started from initiating the timer until a predetermined time, it is determined that the network is overloaded, thus, the capacity of next transmission data is decreased.

However, in the conventional radio communication system, although radio terminal apparatus 13 carries out a radio transmission of ACK signal according to the timing shown in FIG. 3, the timeout case may occur before transmission side terminal apparatus 12 receives the respective ACK signal, in such a case the TCP throughput will be decreased.

### Disclosure of Invention

It is an object of the present invention to provide base station apparatus, radio transmission system and packet transmission method which can prevent timeout that may occur before transmission side terminal apparatus receives the ACK signal even when radio terminal apparatus carries out a radio transmission of the respective ACK signal according to timing, hence, able to prevent the decreasing of TCP throughput.

Such an object can be achieved by knowing the timeout information of terminal apparatus that a base station apparatus communicates with over a TCP by a certain method, and by retransmission of packet information close to timeout using a transmission method of less possible error in radio terminal apparatus which carries out radio communication over layer 2.

### Brief Description of Drawings

FIG. 1 is a system configuration figure which shows a configuration of a radio communication system;
FIG. 2 is a sequence diagram showing packet transmission procedures of a conventional radio communication system;
FIG. 3 is a sequence diagram showing packet transmission procedures of a conventional radio communication system;
FIG. 4 is a block diagram showing a configuration of a base station apparatus and transmission side terminal apparatus of a radio communication system according to Embodiment 1 of the present invention;
FIG. 5 is a sequence diagram showing packet transmission procedures of a radio communication system according to Embodiment 1 of the present invention;
FIG. 6 is a block diagram showing a configuration of a base station apparatus and transmission side terminal apparatus of a radio communication system according to Embodiment 2 of the present invention; and
FIG. 7 is a sequence diagram showing packet transmission procedures of a radio communication system according to Embodiment 2 of the present invention.

### Best Mode for Carrying out the Invention

Hereafter, embodiments of the present invention will be specifically described with reference to the accompanying drawings.

### (Embodiment 1)

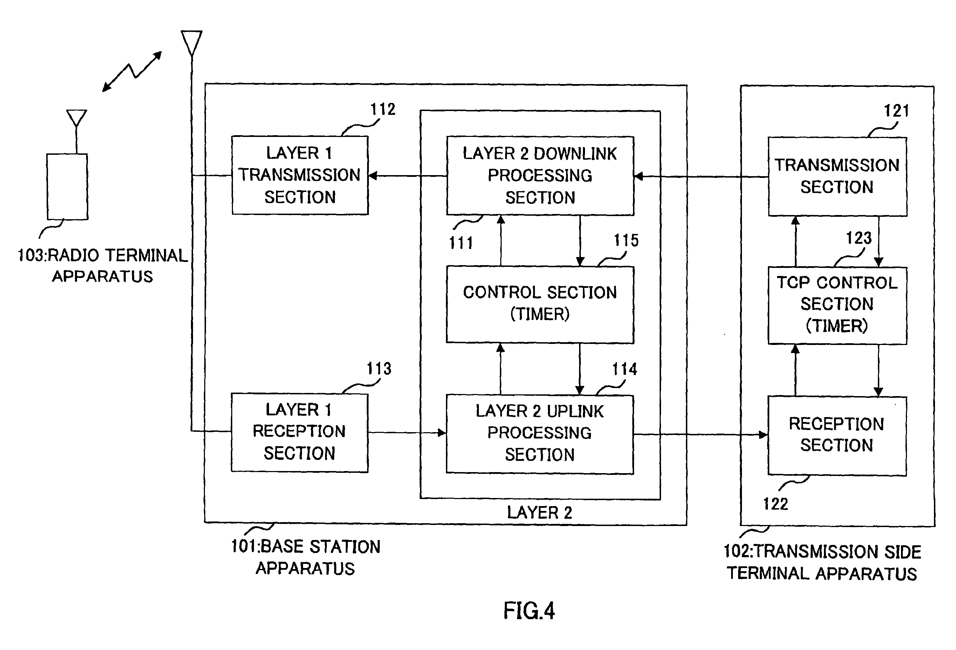

FIG. 4 is a block diagram showing a configuration of a base station apparatus and transmission side terminal apparatus of a radio communication system according to Embodiment 1 of the present invention. Base station apparatus 101 carries out wired-communication with transmission side terminal apparatus 102 through network, etc., while carries out wireless communication with radio terminal apparatus 103.

In FIG. 4, base station apparatus 101 mainly comprises: layer 2 downlink processing section 111, layer 1 transmission section 112, layer 1 reception section 113, layer 2 uplink processing section 114, and control section 115. In addition, transmission side terminal apparatus 102 mainly comprises: transmission section 121, reception section 122, and TCP control section 123.

In base station apparatus 101, memory is built in layer 2 downlink processing section 111, and the data transmitted from transmission section 121 of transmission side terminal apparatus 102 is accumulated in the memory when a new data is transmitted then the data is subjected to processing in layer 2 and outputted to layer 1 transmission section 112. In addition, layer 2 downlink processing section 111 outputs information shows that a data was newly transmitted to control section 115. Moreover, layer 2 downlink processing section 111 outputs timeout information that shows the time of transmission side terminal apparatus 102 timeout transmitted from transmission section 121 to control section 115. In addition, layer 2 downlink processing section 111 also in retransmission case, outputs the data accumulated in memory after being processed in layer 2 to layer 1 transmission section 112. Moreover, when an MCS control signal which is a control signal that shows updated modulation method is inputted from control section 115, layer 2 downlink processing section 111 reduces the number of bits per modulated symbol, accordingly, modulates the data accumulated in the memory then outputs the result to layer 1 transmission section 112. In addition, the modulation after reducing the number of bits per modulated symbol, for example, when a 16QAM was used, an 8PSK, QPSK, etc. is then used for modulation.

Layer 1 transmission section 112 radio transmits the signal outputted from layer 2 downlink processing section 111 via antenna after being subjected to a radio processing. Layer 1 reception section 113 outputs the radio signal received through the antenna to layer 2 uplink processing section 114 after being subjected to radio processing.

Layer 2 uplink processing section 114 processes the signal outputted from layer 1 reception section 113 in layer 2, outputs an ACK signal or a NACK signal to control section 115, and transmits an ACK signal and data to transmission side terminal apparatus 102. In addition, layer 2 uplink processing section 114 transmits a signal that requests a timeout information (hereinafter, it is referred to as "timeout information request signal") outputted from control section 115 to transmission side terminal apparatus 102.

Control section 115 in which a timer is built in, outputs timeout information request signal to layer 2 uplink processing section 114, where the timer is initiated at the time of transmission a new data by layer 2 downlink processing section 111. In addition, control section 115 calculates timing of the virtual timeout based on timeout information. Moreover, when control section 115 inputs an ACK signal, the timer is reset and a new data transmission is notified to layer 2 downlink processing section 111, while when a NACK signal is inputted, a retransmission is notified to layer 2 downlink processing section 111. Control section 115 outputs MCS control signal to layer 2 downlink processing section in the case when the timing of the virtual timeout becomes very close (for example, the timing before a predetermined time from the timing of timeout).

In addition, the timing of virtual timeout is the timing after transmission of delayed data which is due to transmission timing of layer 2 of base station apparatus 101, and the timing after the time out before reception ACK signal from radio terminal apparatus by transmission side terminal apparatus.

In addition, the timing of virtual timeout is the transmission timing of the data in layer 2 of base station apparatus 101, and if data is transmitted later than this timing, it is the timeout which is before ACK signal from radio terminal apparatus 103 is received by transmission side terminal apparatus 102.

Transmission section 121 in transmission side terminal apparatus 102 transmits downlink signal and timeout information to layer 2 downlink processing section 111, and outputs a control signal to show that a downlink signal was transmitted to TCP control section 123.

Reception section 122 carries out radio processes, and receives the uplink signal, ACK signal, and timeout information request signal from layer 2 uplink processing section 114.

In the case when the timer which was built in TCP control section 123 is initiated whenever a new data is transmitted by transmission section 121 and ACK signal is inputted, TCP control section 123 resets the timer and notifies transmission section 121 of a new data transmission.

In addition, TCP control section 123 resets the timer when the timeout exceeds the time interval from initiating timer until a predetermined time, and decreases the capacity of the next transmission data when determining that the network is overloaded. Moreover, when timeout information request signal is inputted, TCP control section 123 outputs timeout information that shows the time of timeout to transmission section 121. Additionally, the time interval from timer initiating until timeout is set individually by each transmission side terminal apparatus.

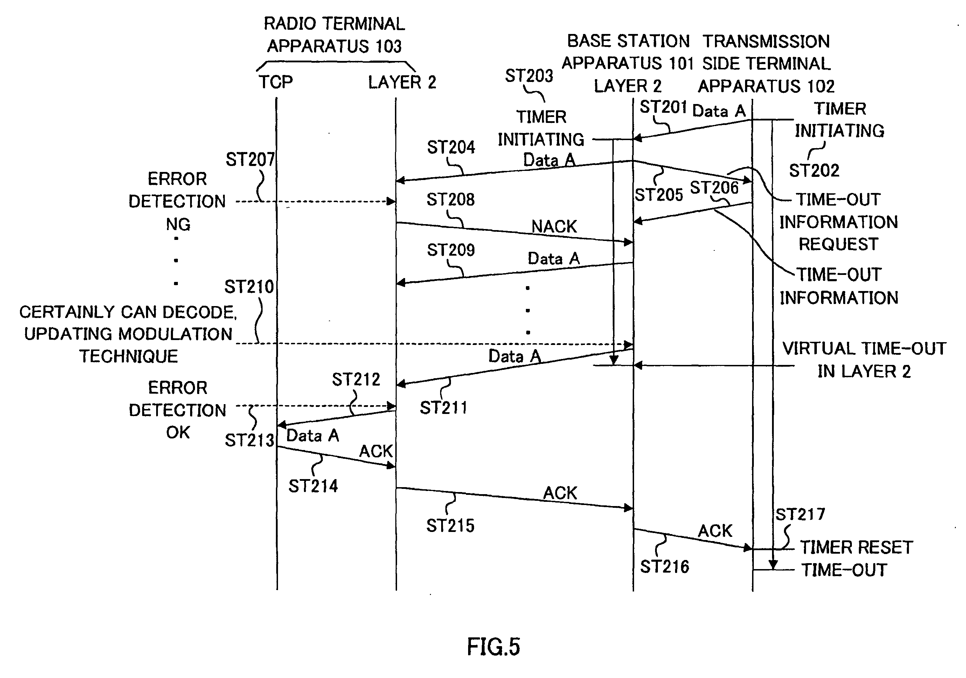

Packet transmission procedures of the radio communication system according to the present embodiment will be explained below using the sequence diagram of FIG. 5. First, transmission side terminal apparatus 102 transmits data A (Data A) to base station apparatus 101 (ST: step 201), and a timer is initiated (ST202).

Base station apparatus 101 initiates the timer at the time of receiving data A from transmission side terminal apparatus 102 (ST203), radio transmits data A in layer 2 to radio terminal apparatus 103 (ST204), and transmits timeout information request signal to transmission side terminal apparatus 102 (ST205).

Transmission side terminal apparatus 102 transmits timeout information to base station apparatus 101, and base station apparatus 101 calculates the timing of the virtual timeout based on timeout information (ST206).

Radio terminal apparatus 103 performs error detection on Data A in layer 2, and radio transmits a NACK signal which indicates a retransmission request of Data A in layer 2 (ST208) to base station apparatus 101 if an error was detected (ST207). When NACK signal is received as a radio signal from radio terminal apparatus 103, base station apparatus 101 retransmits Data A in the same way as the aforementioned ST204 (ST209).

Then, the aforementioned processing ST207-ST209 are repeated until an error is no longer detected in radio terminal apparatus 103.

In addition, if the visual timeout timing approaches while radio terminal apparatus 103 continues detecting error, base station apparatus 101 reduces the m-ary modulation and modulates the Data A (ST210), and radio transmits the Data A in layer 2 to radio terminal apparatus 103 (ST211).

If an error is not detected in radio terminal apparatus 103 (ST212), Data A is passed to TCP layer (ST213), and ACK signal that indicates a correct reception is passed to layer 2 from TCP (ST214).

Then, radio terminal apparatus 103 radio transmits the ACK signal in layer 2 to base station apparatus 101 (ST215), and base station apparatus 101 transmits the ACK signal which received from radio terminal apparatus 103 as a radio signal to transmission side terminal apparatus 102 (ST216). When transmission side terminal apparatus 102 receives an ACK signal, the timer is reset (ST217).

Thus, in radio communication system according to the present embodiment, base station apparatus requests timeout information to transmission side terminal apparatus, knows that timeout is pressed based on received timeout information, reduces the number of bits per modulated symbol and retransmits the packet information close to timeout after being modulated. Accordingly, deterioration of TCP throughput can be prevented since almost there is no reduction of the data size of the next transmission of transmission side terminal apparatus by the timeout.

Moreover, it is also effective to perform retransmission with lower error rate by decreasing the error coding rate or by increasing the spreading factor.

Moreover, in ST201 of the sequence diagram of the aforementioned FIG. 5, transmission side terminal apparatus 102 may transmit timing information to base station apparatus 101 along with data A. In this case, the control can be simplified and steps ST205 and ST206 become unnecessary.

Furthermore, although the present embodiment explains the case where the time interval from initiating the timer until timeout was individually set by each transmission side terminal, such a time may be set commonly by all transmission side terminals in a system. In this case, if base station apparatus memorizes such a time beforehand, it is not necessary to receive timeout information from each transmission side terminal, and hence, the control can be simplified.

### (Embodiment 2)

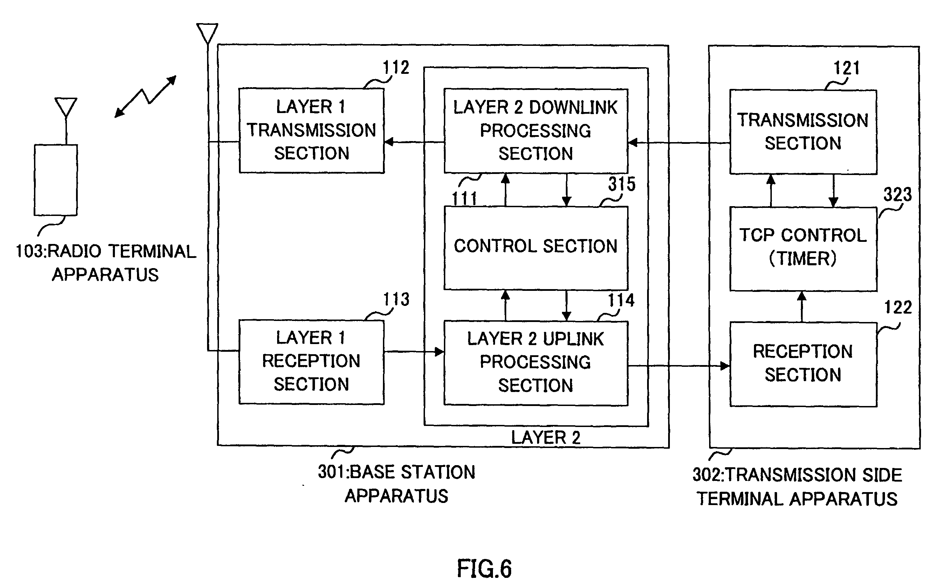

FIG. 6 is a block diagram showing a configuration of a base station apparatus and transmission side terminal apparatus of a wireless communication system according to Embodiment 2 of the present invention. In addition, the portions in FIG. 6 which are common to that of FIG. 4 will be assigned the same reference numerals of FIG. 4, and explanation thereof will be omitted.

Radio communication system shown in FIG. 6 differs from that shown in FIG. 4 by the control section 115 of base station apparatus 101 of FIG. 4, where the point is that there is no timer built in control section 315 of base station apparatus 301. Moreover, the radio communication system shown in FIG. 6 differs from that shown in FIG. 4 by the TCP control section 123 of transmission side terminal apparatus 102 of FIG. 4, where the point is that the TCP control section 323 of transmission side terminal apparatus 302 outputs timeout information to transmission section 121 when the time out becomes close.

Control section 315 outputs MCS control signal to layer 2 downlink processing section 111 when timeout information is inputted from layer 2 downlink processing section 111.

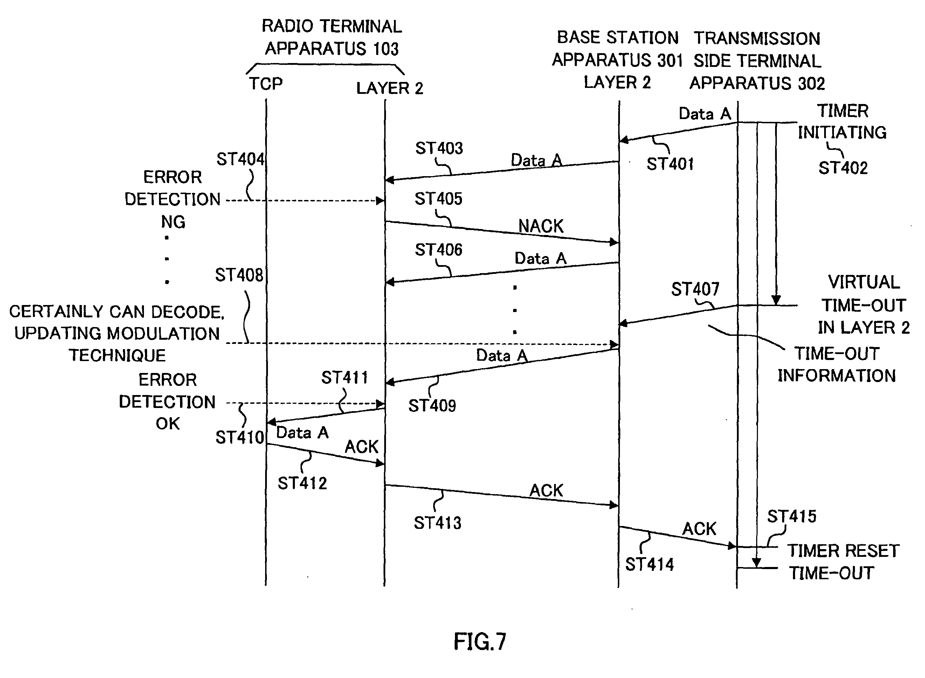

Packet transmission procedures of the radio communication system according to the present embodiment will be explained below using the sequence diagram of FIG. 7. Transmission side terminal apparatus 302 transmits data A (Data A) to base station apparatus 301 (ST401), and a timer is initiated (ST402). Base station apparatus 301 radio transmits data A in layer 2 to radio terminal apparatus 103 (ST403).

Radio terminal apparatus 103 performs error detection on Data A in layer 2, and radio transmits a NACK signal which indicates a retransmission request of Data A in layer 2 (ST405) to base station apparatus 301 if an error was detected (ST404). When NACK signal is received as a radio signal from radio terminal apparatus 103, base station apparatus 301 retransmits Data A in the same way as the aforementioned ST403 (ST406).

Then, the aforementioned processing ST404-ST406 are repeated until an error is no longer detected in radio terminal apparatus 103.

In addition, transmission side terminal apparatus 302 transmits timing information to base station apparatus 301 (ST407) if the virtual timeout timing approaches while radio terminal apparatus 103 continues detection error (ST407).

When base station apparatus 301 receives timing information, the number of bits per modulated symbol is reduced and Data A is modulated (ST408), Data A in layer 2 is radio transmitted to radio terminal apparatus 103 (ST409).

If an error is not detected in radio terminal apparatus 103 (ST410), Data A is passed to TCP (ST411), and ACK signal that indicates a correct reception is passed to layer 2 from TCP (ST412).

Then, radio terminal apparatus 103 radio transmits the ACK signal in layer 2 to base station apparatus 301 (ST413), and base station apparatus 301 transmits the ACK signal which is received from radio terminal apparatus 103 as a radio signal to transmission side terminal apparatus 302 (ST414). When transmission side terminal apparatus 302 receives an ACK signal, the timer is reset (ST415).

Thus, in radio communication system according to the present embodiment, base station apparatus knows that timeout is pressed after receiving timeout information, reduces number of bits per modulated symbol and retransmits packet information close to timeout after being modulated. Accordingly, deterioration of TCP throughput can be prevented as there is no reduction of data capacity of next transmission of transmission side terminal apparatus by the timeout.

Moreover, although the case when base station apparatus reduces m-ary modulation, and retransmit the packet information close to timeout after being modulated is explained in the present embodiment as described above, but the present invention is not limited to this and retransmission using any other transmission method which reduces error occurrence in radio terminal apparatus is also possible.

For example, base station apparatus can obtain the advantage offered by the present invention by retransmitting priority degree of packet information close to timeout after being increased. Such a case is efficient for radio communication system which uses hybrid ARQ.

Moreover, it is also effective to perform retransmission with lower error rate by decreasing the error coding rate or by increasing the spreading factor.

As is clear from the above-mentioned explanation, according to the present invention, timeout information of the terminal apparatus that a base station apparatus communicates with over TCP is known by a certain method, by retransmission of packet information close to timeout by radio terminal apparatus which carries out radio communication with layer 2 using transmission method having low error possibility, a deterioration of TCP throughput can be prevented.

The present application is based on the Japanese Patent Application No. 2001-155413 filed on May 24, 2001, entire content of which is expressly incorporated by reference herein.

### Industrial Applicability

The present invention is applicable to base station apparatus which carries out wired-communication with one terminal apparatus while carries out wireless packet transmission with other terminal apparatus.

## Claims

1. Abase station apparatus carries out wired-communication with first terminal apparatus using transmission control protocol, and carries out wireless communication with second terminal apparatus, wherein base station apparatus comprising:
information acquiring section which acquires in advance a base time that serves as a basis for determining whether or not said first terminal apparatus decreases a transmission capacity of next data; and
transmission section which retransmits said data using a transmission method of less possible error in said second terminal apparatus after determining that said base time is approaching when predetermined time of said standard time becomes first.

2. The base station apparatus according to claim 1, wherein said transmission section, when the base time approaches, reduces the number of bits per modulated symbol to modulate and retransmit the data.

3. The base station apparatus according to claim 1, wherein said transmission section, when the base time approaches, decreases the coding rate to perform error correction code and retransmit the data.

4. The base station apparatus according to claim 1, wherein said transmission section, when base time approaches, increases a spreading factor to spread and retransmit the data.

5. The base station apparatus according to claim 1, wherein said transmission section, when base time approaches, retransmits the data after increases a priority thereto.

6. Abase station apparatus carries out wired-communication with first terminal apparatus using transmission control protocol, and carries out wireless communication with second terminal apparatus, wherein said base station apparatus comprising:
information acquiring section which acquires in advance a base time that serves as a basis for determining whether or not said first terminal apparatus decreases a transmission capacity of next data; and
transmission section, when said base time approaches, retransmits the data after increases a priority thereto.

7. A radio communication system in which a base station apparatus carries out a wired-communication with first terminal apparatus using transmission control protocol, and carries out wireless communication with a second terminal apparatus, wherein
said first terminal apparatus carries out a determination of decreasing the data transmission capacity in case when a predetermined time is passed after transmitting the data; and
said base station apparatus carries out radio communication by acquiring in advance a base time which serves as abase of said determination of said first terminal apparatus, and retransmitting said data using a transmission technique of less error possibility in said second terminal apparatus when said base time approaches.

8. The radio communication system according to claim 7, wherein said base station apparatus, when the base time approaches, reduces the number of bits per modulated symbol to modulate and retransmit the data.

9. The radio communication system according to claim 7, wherein said base station apparatus, when the base time approaches, decreases a coding rate then retransmits the data after being subjected to error correction coding.

10. The radio communication system according to claim 7, wherein said base station apparatus, when the base time approaches, increases a spreading factor to spread and retransmit the data.

11. The radio communication system according to claim 7, wherein said base station apparatus, when the base time approaches, retransmits the data after increases a priority thereto.

12. A radio communication system in which a base station apparatus carries out a wired-communication with a first terminal apparatus using transmission control protocol, and carries out wireless communication with a second terminal apparatus, wherein
said first terminal apparatus carries out a determination of decreasing the transmission capacity of next data in case when a predetermined time is passed after transmitting the data; and
said base station apparatus carries out radio communication by acquiring in advance a base time which serves as a base of said determination of said first terminal apparatus, and retransmitting said data after increases a priority degree thereto when said base time approaches.

13. The radio communication system according to claim 7, wherein base station apparatus requests a notification of base time to first terminal apparatus, and said first terminal apparatus, when said request is received, notifies said base time to said base station apparatus.

14. The radio communication system according to claim 7, wherein said first terminal apparatus notifies base time while transmitting data to base station apparatus.

15. The radio communication system according to claim 7, wherein said first terminal apparatus notifies said base time to base station apparatus at the time said base time approaches .

16. A packet transmission method by which base station apparatus carries out a wired-communication with first terminal apparatus using transmission control protocol, and said base station apparatus carries out wireless communication with a second terminal apparatus, wherein said packet transmission method comprising:
step of carrying out a determination of the decrease of transmission capacity of next data in case when a predetermined time is passed after transmitting the data by said first terminal apparatus;
step of acquiring in advance a base time which serves as a base of said determination of said first terminal apparatus by said base station apparatus; and
step of retransmitting said data using a transmission technique of less error possibility in said second terminal apparatus by said base station apparatus when said base time approaches.
